(19)

**Europäisches Patentamt**
**European Patent Office**
**Office européen des brevets**

(11)　**EP 4 625 575 A1**

(12)　# EUROPEAN PATENT APPLICATION

(43) Date of publication:
　　**01.10.2025　Bulletin 2025/40**

(21) Application number: **25160089.6**

(22) Date of filing: **25.02.2025**

(51) International Patent Classification (IPC):
　　$H01M\ 10/0525^{(2010.01)}$　　$H01M\ 10/0567^{(2010.01)}$
　　$H01M\ 10/0568^{(2010.01)}$　　$H01M\ 10/0569^{(2010.01)}$
　　$H01M\ 4/131^{(2010.01)}$　　$H01M\ 4/133^{(2010.01)}$
　　$H01M\ 4/587^{(2010.01)}$　　$H01M\ 4/02^{(2006.01)}$

(52) Cooperative Patent Classification (CPC):
　　**H01M 10/0525; H01M 10/0567; H01M 10/0568;**
　　**H01M 10/0569;** H01M 4/131; H01M 4/133;
　　H01M 4/587; H01M 2004/021; H01M 2004/027

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**GE KH MA MD TN**

(30) Priority: **28.03.2024　CN 202410377218**

(71) Applicant: **BYD Company Limited**
　　**Shenzhen, Guangdong 518118 (CN)**

(72) Inventors:
　　• **ZHANG, Wei**
　　　**Shenzhen, Guangdong 518118 (CN)**

• **MAO, Min**
　**Shenzhen, Guangdong 518118 (CN)**
• **LUO, Caihui**
　**Shenzhen, Guangdong 518118 (CN)**
• **JIN, Jing**
　**Shenzhen, Guangdong 518118 (CN)**
• **TAN, Chaopu**
　**Shenzhen, Guangdong 518118 (CN)**

(74) Representative: **Taor, Simon Edward William et al**
　　**Venner Shipley LLP**
　　**200 Aldersgate**
　　**London EC1A 4HD (GB)**

(54)　**LITHIUM ION BATTERY AND ELECTRIC DEVICE**

(57)　The present disclosure discloses a lithium ion battery and an electric device. The lithium ion battery includes a positive electrode; a negative electrode, where the negative electrode includes a negative electrode current collector and at least a negative electrode active material layer, the negative electrode active material layer is coated on one or two sides of the negative electrode current collector, and the total thickness of the negative electrode active material layer on a single side of the negative electrode current collector is d μm; and an electrolyte solution, where the electrolyte solution has an ionic conductivity of C mS/cm, and the electrolyte solution has a viscosity of $\delta$ mPa·s, where C and $\delta$ meet the following relation formula: $3 \leq d/(C*\delta) \leq 6$. **In the present disclosure, by the electrolyte solution matching with different ionic conductivities and viscosities, the infiltration for the electrode sheet by the electrolyte solution is effectively improved, and the cycle performance over a wide temperature range is improved.**

**EP 4 625 575 A1**

**Description**

<u>FIELD</u>

The present disclosure relates to the technical field of lithium ion batteries, and specifically to a lithium ion battery and an electric device.

<u>BACKGROUND</u>

Lithium ion batteries, due to their high energy density, long cycle life, no memory effect, and other advantages, are widely used in portable electronic devices, electric vehicles, smart grids and so on. In recent years, the requirements for the gravimetric and/or volumetric energy density of lithium ion batteries become higher year by year.

A common way of improving the energy density of lithium ion batteries is to load more active substance on an electrode sheet with the same size. However, the loading of more active substance will increase the thickness and/or bulk density of the electrode sheet, increase the difficulty of infiltration by an electrolyte solution, and enhance the transport impedance of lithium ions in the electrode sheet. Uneven infiltration will result in the formation of an irregular SEI film, affecting the cycle performance of the battery over a wide temperature range in a subsequent cycle process.

<u>SUMMARY</u>

In view of this, the present disclosure provides a lithium ion battery and an electric device. By an electrolyte solution matching with different ionic conductivities and viscosities, the infiltration for an electrode sheet by the electrolyte solution is effectively improved, to ensure the infiltration for the electrode sheet and the transport dynamics of lithium ions in the electrode sheet while the energy density of the lithium ion battery is improved, whereby the cycle performance of the lithium ion battery over a wide temperature range is improved.

In a first aspect, an embodiment of the present disclosure provides a lithium ion battery. The lithium ion battery includes

a positive electrode, where the positive electrode includes a positive electrode current collector and at least a positive electrode active material layer, and the positive electrode active material layer is coated on one or two sides of the positive electrode current collector;

a negative electrode, where the negative electrode includes a negative electrode current collector and at least a negative electrode active material layer, the negative electrode active material layer is coated on one or two sides of the negative electrode current collector, and the total thickness of the negative electrode active material layer on a single side of the negative electrode current collector is d $\mu$m; and

an electrolyte solution, where the electrolyte solution has an ionic conductivity of C mS/cm, and the electrolyte solution has a viscosity of $\delta$ mPa·s.

The lithium ion battery meets a relation formula: $3 \leq d/(C*\delta) \leq 6$, where the ionic conductivity C refers to the ionic conductivity at 25°C, and the viscosity $\delta$ refers to a corresponding viscosity at 25°C and at a shear rate of 50 s$^{-1}$.

In an embodiment, $6 \leq C \leq 12$.

In an embodiment, $3 \leq \delta \leq 5$.

In an embodiment, $100 \leq d \leq 250$.

In an embodiment, $70 \leq d' \leq 170$.

In an embodiment, the negative electrode sheet has a vertical resistivity of R1 $\Omega$·cm, and the positive electrode sheet has a vertical resistivity of R2 $\Omega$·cm. R1 and R2 meet the following relation formulas: $0.1 \leq R2/R1 \leq 0.5$, and $0.1 \leq d'*R2/(d*R1) \leq 0.3$.

In an embodiment, $5000 \leq R1 \leq 6000$.

In an embodiment, $1500 \leq R2 \leq 2500$.

In an embodiment, the electrolyte solution includes a solvent, and the solvent includes one or more of a cyclic carbonate, a linear carbonate, and a carboxylate compound.

The carboxylate compound includes at least one of ethyl formate, methyl acetate, ethyl acetate, propyl acetate, ethyl propionate, propyl propionate, butyl propionate, pentyl propionate, halogenated ethyl acetate, halogenated ethyl propionate, halogenated propyl propionate, halogenated butyl propionate, or halogenated pentyl propionate.

The linear carbonate includes at least one of dimethyl carbonate, ethyl methyl carbonate, diethyl carbonate, halogenated dimethyl carbonate, halogenated ethyl methyl carbonate, and halogenated diethyl carbonate.

The cyclic carbonate includes at least one of cyclic ethylene carbonate, cyclic propylene carbonate, halogenated cyclic ethylene carbonate, and halogenated cyclic propylene carbonate.

In an embodiment, the electrolyte solution further includes a lithium salt. The lithium salt includes one or more of lithium hexafluorophosphate, lithium tetrafluoroborate, lithium bis(fluorosulfonyl)imide, lithium trifluoromethylsulfonate, lithium perchlorate, lithium difluoro(oxalato)borate, and lithium bis(oxalato)borate.

In an embodiment, the lithium salt concentration is W% based on the total weight of the electrolyte solution, and W meets the following relation formula: $10 \leq W \leq 16$.

In an embodiment, the negative electrode active material layer includes a negative electrode active material. The negative electrode active material includes at least one of soft carbon, hard carbon, carbon fibers, graphitized carbon microspheres, artificial graphite, natural graphite, silicon, silicon carbide, and silicon-carbon composite materials.

In an embodiment, the positive electrode active material layer includes a positive electrode active material. The positive electrode active material includes at least one of a lithium cobalt oxide, a lithium nickel oxide, a lithium manganese oxide, a lithium nickel manganese oxide, a lithium nickel cobalt manganese oxide, and a lithium nickel cobalt aluminum oxide.

In an embodiment, the lithium ion battery includes a separator. The separator is arranged between the positive electrode and the negative electrode, and the separator is impregnated by the electrolyte solution.

In the present disclosure, by the electrolyte solution matching with different ionic conductivities and viscosities, the infiltration for the electrode sheet by the electrolyte solution is effectively improved, and the transport resistance of lithium ions in the electrode sheet is reduced. Accordingly, the lithium ion battery with a high energy density can ensure the normal-temperature cycle performance, the high-temperature cycle performance, and the low-temperature discharge performance.

In a second aspect, an embodiment of the present disclosure provides an electric device. The electric device includes a lithium ion battery according to the first aspect. The electric device provided in the embodiment of the present disclosure includes a lithium ion battery according to the first aspect. The lithium ion battery has good cycle performance over a wide temperature range, so that the electric device can be used stably for a long time, which is beneficial to improving the performance of the electric device during use under various working conditions.

## DETAILED DESCRIPTION

The technical solutions in the embodiments of the present disclosure will be described clearly and fully hereinafter. Apparently, the embodiments described are merely some, rather than all of the embodiments of the present disclosure. All other embodiments obtained by ordinary persons skilled in the art without creative efforts based on the embodiments of the present disclosure shall fall within the protection scope of the present disclosure.

Unless otherwise stated, all technical and scientific terms used herein have the same meaning as commonly understood by persons skilled in the art to which the present disclosure pertains. The terms used in the descriptions of the present disclosure are for the purpose of describing specific embodiments only and are not intended to limit the present disclosure. The term "and/or" as used herein includes any and all combinations of one or more of the listed related items.

Embodiments of the present invention are described in detail below. The embodiments and the features in the embodiments in the present disclosure can be combined with each other without conflict.

Lithium ion batteries, due to their high energy density, long cycle life, and no memory effect, and other advantages, are widely used in portable electronic devices, electric vehicles, smart grids and so on. Since the commercialization of the lithium ion battery, the requirements for the gravimetric and/or volumetric energy density of lithium ion batteries become higher year by year. In addition to the use of a positive electrode active material or a negative electrode active material with higher capacity to improve the energy density, another simple and feasible method is to raise the upper-limit cut-off charging voltage.

The energy density is mainly improved through the improvement of materials in the above methods. Additionally, by means of reasonable design, it is also a common method to increase the energy density by loading more active material on an electrode sheet of the same size. However, the loading of more active substance will increase the thickness and/or bulk density of the electrode sheet, increase the difficulty of infiltration by an electrolyte solution, and enhance the transport impedance of lithium ions in the electrode sheet. Uneven infiltration will result in the formation of an irregular SEI film, In the subsequent cycle process, the solvent and/or additive gain(s) electrons at the negative electrode interface and is/are reduced, causing gas generation. The increase of the transport impedance of lithium ions in the electrode sheet leads to elevated polarization of the battery core during the charging and discharging process and the significant increase of the risk of lithium plating during the cycle process, affecting the cycle performance of the lithium ion battery over a wide temperature range.

Based on this, the present disclosure provides a lithium ion battery. The lithium ion battery includes a positive electrode, where the positive electrode includes a positive electrode current collector and at least a positive electrode active material layer, and the positive electrode active material layer is coated on one or two sides of the positive electrode current collector; a negative electrode, where the negative electrode includes a negative electrode current collector and at least a negative electrode active material layer, the negative electrode active material layer is coated on one or two sides of the negative electrode current collector, and the total thickness of the negative electrode active material layer on a single side of the negative electrode current collector is d $\mu$m; and an electrolyte solution, where the electrolyte solution has an ionic conductivity of C mS/cm, and the electrolyte solution has a viscosity of $\delta$ mPa·s. The lithium ion battery meets a relation formula below: $3 \leq d/(C^*\delta) \leq 6$, where the ionic conductivity C refers to the ionic conductivity at 25°C, and the viscosity $\delta$ refers to a corresponding viscosity at 25°C and at a shear rate of 50 s$^{-1}$.

The value of $d/(C^*\delta)$ represents the relation between the thickness of the negative electrode active material and the conductivity and viscosity of the electrolyte solution. When $d/(C^*\delta)>6$, the corresponding thickness of the negative electrode active material of the lithium ion battery is too large, and the electrolyte solution has difficulty to fully infiltrate the electrode sheet. This causes the appearance of black spots in the infiltrated area during the normal-temperature cycle process of the battery and thus lithium plating, affecting the normal-temperature cycle performance of the battery. When $d/(C^*\delta)<3$, the corresponding $C^*\delta$ value of the electrolyte solution of the lithium ion battery is large, and the electrolyte solution contains more low-boiling and low-viscosity solvent and has poor oxidation resistance at this time. This leads to side reactions such as solvent oxidation during the high-temperature cycle process of the battery, and further causes the battery to swell, affecting the high-temperature cycle performance. When $3 \leq d/(C^*\delta) \leq 6$, the electrolyte solution fully infiltrates the electrode sheet, and the oxidation resistance of the electrolyte solution is good, so the battery can have a good cycle performance over a wide temperature range. In some embodiments, $4 \leq d/(C^*\delta) \leq 6$; $3 \leq d/(C^*\delta) \leq 5$; or $4 \leq d/(C^*\delta) \leq 5$.

In an embodiment, the total thickness d of the negative electrode active material layer meets a relation formula below: $100 \leq d \leq 250$. Optionally, the negative electrode active material layer may include a single layer, two layers, or multiple layers. When the negative electrode active material layer includes multiple layers, the negative electrode active material layer includes a first active material layer, a second active material layer, ... and an n$^{th}$ active material layer. On a single side of the current collector, the thickness of the first active material layer is $d_1$ $\mu$m, the thickness of the second active material layer is $d_2$ $\mu$m,... and the thickness of the n$^{th}$ active material layer is $d_n$ $\mu$m, where $d_1+d_2+...+d_n = d$, provided that $100 \leq d \leq 250$. When the thickness of the negative electrode active material layer is in this range, the electrode sheet is ensured to have enough active material in the electrode sheet, so that the battery has higher energy density; and the resistance to lithium ion transport will not be too large, to avoid the deterioration of the battery performance. Optionally, the total thickness d of the negative electrode active material layer may be 100, 102, 105, 110, 114, 120, 136, 143, 160, 188, 190, 200, 220, 250, or any value therebetween. For example, $150 \leq d \leq 250$; $100 \leq d \leq 200$; or $150 \leq d \leq 200$.

In an embodiment, the total thickness of the positive electrode active material layer on a single side of the positive electrode current collector is d' $\mu$m, and d' meets the following relation formula: $70 \leq d' \leq 170$. When the thickness of the positive electrode active material layer is in this range, the electrode sheet is ensured to have enough active material in the electrode sheet, so that the battery has higher energy density; and the resistance to lithium ion transport will not be too large, to avoid the deterioration of the battery performance. Optionally, the total thickness d' of the positive electrode active material layer may be 80, 85, 97, 100, 115, 124, 138, 150, 170, or any value therebetween. For example, $120 \leq d' \leq 170$; $70 \leq d' \leq 150$; or $120 \leq d' \leq 150$.

In an embodiment, the negative electrode sheet has a vertical resistivity of R1 $\Omega$·cm, and the positive electrode sheet has a vertical resistivity of R2 $\Omega$·cm. R1 and R2 meet the following relation formulas: $0.1 \leq R2/R1 \leq 0.5$, $0.1 \leq d'^*R2/(d^*R1) \leq 0.3$. The vertical resistivity reflects the degree of resistance of the electrode material to the current in the vertical direction. The resistivity of the positive/negative electrode depends on the material type, microstructure, blending of other substances, particle size and distribution, porosity, interface characteristics, and other factors. When d', R1 and R2 meet the above relation, the electronic conductivities of the positive and negative electrodes are relatively balanced, and the lithium intercalation/deintercalation kinetics of the positive and negative electrodes is relatively matched, to avoid elevated polarization of the battery core, and increased risk of lithium plating on the negative electrode, thereby improving the energy density of the battery.

In an embodiment, the electrolyte solution has a conductivity of C mS/cm, and C meets the following relation formula: $6 \leq C \leq 12$. The conductivity depends on the ion concentration in the electrolyte solution, the ion mobility, the temperature of the electrolyte solution, and other factors. Here, the ionic conductivity C refers to the ionic conductivity at 25°C. When the ionic conductivity of the electrolyte solution is within this range, the ion concentration and mobility in the electrolyte solution reach a balance point, at which the electrolyte solution is neither too thin (the ion concentration is low), nor too sticky (the ion migration is hindered), thereby promoting the rapid conduction of ions. Optionally, C is 6, 7, 7.5, 8, 9.6, 10.2, 11, 12, or any value therebetween. For example, $8 \leq C \leq 12$; $6 \leq C \leq 10$; or $8 \leq C \leq 10$.

In an embodiment, the electrolyte solution has a viscosity of $\delta$ mPa·s. $\delta$ meets the following relation formula: $3 \leq \delta \leq 5$, where the viscosity $\delta$ refers to a corresponding viscosity at 25°C and at a shear rate of 50 s$^{-1}$. When the viscosity of the electrolyte solution is within this range, generally, the content of low-boiling-point and low-viscosity solvent in the electrolyte solution is less or the content of lithium salt is higher. The electrolyte solution has good oxidation resistance, and is not prone to side reactions such as solvent oxidation in the high-temperature cycle process. Moreover, the electrolyte solution has good fluidity, which facilitates the infiltration of the electrode sheet by the electrolyte solution and the transfer of lithium ions in the electrolyte solution, to improve the low-temperature discharge performance of the battery. Optionally, $\delta$ is

3, 3.4, 3.6, 4.0, 4.3, 4.8, 5.0, or any value therebetween. For example, $3.5 \leq \delta \leq 5$; $3 \leq \delta \leq 4.5$; or $3.5 \leq \delta \leq 4.5$.

In an embodiment, the negative electrode has a vertical resistivity of R1 $\Omega \cdot$cm, and R1 meets the following relation formula: $5000 \leq R1 \leq 6000$. When the vertical resistivity of the negative electrode is within the above range, the polarization of the battery during the charging and discharging process can be reduced, thereby improving the cycle life of the battery. Optionally, R1 is 5050, 5170, 5260, 5390, 5480, 5530, 5670, 5750, 5860, 5920, 6000, or any value therebetween. For example, $5250 \leq R1 \leq 6000$; $5000 \leq R1 \leq 5750$; or $5250 \leq R1 \leq 5750$.

In an embodiment, the positive electrode has a vertical resistivity of R2 $\Omega \cdot$cm. R2 meets the following relation formula: $1500 \leq R2 \leq 2500$.

When the vertical resistivity of the positive electrode is within the above range, heat accumulation in the battery can be avoid, to reduce the risk of thermal runaway. Optionally, R2 is 1500, 1580, 1640, 1800, 1950, 2100, 2250, 2410, 2500, or any value therebetween. For example, $1750 \leq R2 \leq 2500$; $1500 \leq R2 \leq 2250$; $5250 \leq R1 \leq 5750$; or $1750 \leq R2 \leq 2250$.

In an embodiment, the electrolyte solution includes a solvent, and the solvent includes one or more of a cyclic carbonate, a linear carbonate, and a carboxylate compound. The carboxylate compound includes at least one of ethyl formate, methyl acetate, ethyl acetate, propyl acetate, ethyl propionate, propyl propionate, butyl propionate, pentyl propionate, halogenated ethyl acetate, halogenated ethyl propionate, halogenated propyl propionate, halogenated butyl propionate, or halogenated pentyl propionate. The linear carbonate includes at least one of dimethyl carbonate, ethyl methyl carbonate, diethyl carbonate, halogenated dimethyl carbonate, halogenated ethyl methyl carbonate, and halogenated diethyl carbonate. The cyclic carbonate includes at least one of cyclic ethylene carbonate, cyclic propylene carbonate, halogenated cyclic ethylene carbonate, and halogenated cyclic propylene carbonate. The cyclic carbonate has a high dielectric constant. This enhances the ionic conductivity of the electrolyte solution, to improve the charging and discharging performance of the battery. The linear carbonate has lower viscosity and higher flash point. This improves the fluidity of the electrolyte solution, reduces the internal resistance of the battery, and improves the safety of the battery. The carboxylate compound also has good chemical stability and wettability, and can form good interfacial contact with the electrode material, to improve the performance of the battery. In summary, the use of one or more of the cyclic carbonate, the linear carbonate, and the carboxylate compound as the solvent in the electrolyte solution in a reasonable combination at a reasonable ratio can comprehensively optimize the performance of the battery.

In an embodiment, the electrolyte solution further includes a lithium salt. The lithium salt includes one or more of lithium hexafluorophosphate, lithium tetrafluoroborate, lithium bis(fluorosulfonyl)imide, lithium trifluoromethylsulfonate, lithium perchlorate, lithium difluoro(oxalato)borate, and lithium bis(oxalato)borate. These lithium salts have high ionic conductivity, and lithium ions can be effectively transferred in the electrolyte solution, to improve the charging and discharging efficiency and performance of the battery. These lithium salts generally have good chemical stability in the working voltage range of the battery, and is unlikely to decompose or have adverse chemical reactions with other battery components, to ensure the long life and safety of the battery.

In an embodiment, the lithium salt concentration is W% based on the total weight of the electrolyte solution, and W meets the following relation formula: $10 \leq W \leq 16$. When the concentration of the lithium salt is within the above range, the electrolyte solution has good infiltration for the electrode sheet and the separator, the concentration of carriers used to transfer charges in the electrolyte solution is moderate, the resistance in the lithium ion transport process is small, and the electrolyte solution has good oxidation resistance. For example, $12 \leq W \leq 16$; $10 \leq W \leq 14$; or $12 \leq W \leq 14$.

In an embodiment, the electrolyte solution further includes an additive. The additive includes one or more of fluoroethylene carbonate, vinylene carbonate, 1,3-propanesultone, 1,3,6-hexane trinitrile, glyceryl trinitrate, 1,2- bis(cyanoethoxy)ethane, 1,4-dicyano-2-butene, fumaronitrile, succinonitrile, and adiponitrile. Some additives (such as fluoroethylene carbonate and vinylene carbonate) can form a stable solid electrolyte interface (SEI) film on the surface of the positive and negative electrodes of the battery. This film helps to prevent further reaction between the electrolyte solution and the electrode material, to reduce the interfacial resistance, improve the stability of the electrolyte solution, and improve the lithium ion transport. Meanwhile, additives such as 1,3,6-hexane trinitrile and glyceryl trinitrate can adjust the viscosity, density, and other physical properties of the electrolyte solution, to better meet the working requirements of the battery.

In an embodiment, the negative electrode active material layer includes a negative electrode active material. The negative electrode active material includes at least one of soft carbon, hard carbon, carbon fibers, graphitized carbon microspheres, artificial graphite, natural graphite, silicon, silicon carbide, and silicon-carbon composite materials. Materials such as silicon and silicon carbide have high theoretical capacity. Soft carbon, hard carbon, graphitized carbon microspheres and other materials have small structural changes, and can maintain high capacity and efficiency after multiple charge and discharge cycles. The above materials are also highly infiltrable by the electrolyte solution, to facilitate the rapid transport of lithium ions between the electrode and the electrolyte solution.

In an embodiment, the positive electrode active material layer includes a positive electrode active material. The positive electrode active material includes at least one of a lithium cobalt oxide, a lithium nickel oxide, a lithium manganese oxide, a lithium nickel manganese oxide, a lithium nickel cobalt manganese oxide, and a lithium nickel cobalt aluminum oxide. These materials show good electrochemical performances during the charging and discharging process, including high lithium ion diffusion coefficient, low polarization resistance, and stable crystal structure, which are beneficial to the rapid charging and discharging, the high rate performance, and the long cycle life of the battery.

In an embodiment, the lithium ion battery further includes a separator. The separator is arranged between the positive electrode and the negative electrode, and the separator is impregnated by the electrolyte solution. The separator can prevent short circuit caused by contact between the positive and negative electrodes of the battery, adjust the fluidity and uniformity of the electrolyte solution, and improve the battery performance and life.

An embodiment of the present disclosure further provides an electric device. The electric device includes the lithium ion battery in any of the above embodiments. Specifically, the electric device may be an electric vehicle, an electric motorcycle, an electric bicycle, a mobile power, a drone, a cell phone, a computer, a camera, a power tool, smart home, or a wearable device.

The electric device provided in the embodiment of the present disclosure includes a lithium ion battery. The lithium ion battery has long cycle life and good rate performance over a wide temperature range, so that the electric device can be used stably for a long time, which is beneficial to improving the performance of the electric device during use.

The technical solution of the present disclosure will be further explained by specific examples and comparative examples.

Example 1

(1) Preparation of electrolyte solution

In an argon-filled glove box with a water content of < 1ppm and an oxygen content of < 1 ppm, the solvents ethylene carbonate (EC), propylene carbonate (PC), diethyl carbonate (DEC), propyl propionate (PP), and ethyl propionate (EP) were evenly mixed according to a certain weight ratio. Then fluoroethylene carbonate (FEC), 1, 3-propane sultone (PS), 1,3,6-hexane trinitrile, and adiponitrile (ADN) were added to the solvent at a certain weight ratio and mixed uniformly. Finally, $LiPF_6$ was added.

(2) Preparation of positive electrode sheet

The positive electrode active material lithium cobalt oxide ($LiCoO_2$), the conductive agent carbon nanotubes (CNTs), and the specific binder polyvinylidene fluoride were mixed according to a weight ratio of 95:2:3. N-methylpyrrolidone (NMP) was added, and stirred by a vacuum stirrer until the system became a uniform positive electrode slurry. Then, the positive electrode slurry was evenly coated on an Al foil as the positive electrode current collector. Then, it was dried at 85°C, cold pressed, cut, sliced, and dried at 85°C under vacuum for 4 h. Thus, the positive electrode sheet was obtained.

(3) Preparation of negative electrode sheet

The negative electrode active material graphite, the binder styrene butadiene rubber (SBR), and the thickener sodium carboxymethyl cellulose (CMC) were fully mixed by stirring in a proper amount of deionized water as a solvent at a weight ratio of 95:2:3 to form a uniform negative electrode slurry. The slurry was coated on a Cu foil as the negative electrode current collector, to form a first negative electrode active material layer. The negative electrode active material graphite, the binder styrene butadiene rubber (SBR), and the thickener sodium carboxymethyl cellulose (CMC) were fully mixed by stirring in a proper amount of deionized water as a solvent at a weight ratio of 96:1.5:2.5 to form a uniform negative electrode slurry. The slurry was coated on the first negative electrode active material layer, to form a second negative electrode active material layer. It was dried, cold-pressed, cut, and sliced, to obtain a negative electrode sheet.

(4) Preparation of separator

The separator was a polypropylene separator.

(5) Preparation of lithium ion battery

The positive electrode sheet, the separator, and the negative electrode sheet were stacked in sequence, where the separator was located between the positive electrode sheet and the negative electrode sheet for isolation therebetween. The system was then wound, and placed in an outer packaging foil. The prepared electrolyte solution was injected into the dried battery. After vacuum packaging, standing, formation, shaping and other procedures, the preparation of the lithium ion battery was completed.

Examples 2 to 13

The ratio of the solvent, the additive, and the lithium salt in the electrolyte solution, the thickness of the active material layer of the positive and negative electrode sheets, and the ionic conductivity and viscosity of the electrolyte solution were adjusted. The thickness and vertical conductivity of the active material layers of the positive and negative electrode sheets were shown in Table 1, and the remaining steps were the same as those in Example 1.

Comparative Examples 1-4

The ratio of the solvent, the additive, and the lithium salt in the electrolyte solution, the thickness of the active material layer of the positive and negative electrode sheets, and the ionic conductivity and viscosity of the electrolyte solution were adjusted. The thickness and vertical conductivity of the active material layers of the positive and negative electrode sheets were shown in Table 1, and the remaining steps were the same as those in Example 1.

Table 1. Physical parameters of electrode sheets and electrolyte solutions in examples and comparative examples

| Example | Total thickness d of negative electrode active material layer ($\mu$m) | Vertical resistivity R1 of negative electrode sheet ($\Omega\cdot$cm) | Total thickness d' of positive electrode active material layer ($\mu$m) | Vertical resistivity R2 of positive electrode sheet ($\Omega\cdot$cm) | Ionic conductivity C of electrolyte solution (mS/cm) | Viscosity $\delta$ of electrolyte solution (mPa$\cdot$s) | d/(C*$\delta$) | d'*R2/ (d*R1) |
|---|---|---|---|---|---|---|---|---|
| Example 1 | 114 | 5439 | 91 | 1912 | 7.49 | 4.9 | 3.11 | 0.28 |
| Example 2 | 160 | 5531 | 91 | 1912 | 7.49 | 4.9 | 4.36 | 0.20 |
| Example 3 | 188 | 5629 | 91 | 1912 | 7.49 | 4.9 | 5.12 | 0.16 |
| Example 4 | 190 | 5766 | 91 | 1912 | 7.49 | 4.9 | 5.18 | 0.16 |
| Example 5 | 200 | 5798 | 91 | 1912 | 7.49 | 4.9 | 5.45 | 0.15 |
| Example 6 | 219 | 5837 | 91 | 1912 | 7.49 | 4.9 | 5.97 | 0.14 |
| Example 7 | 114 | 5439 | 91 | 1912 | 8.02 | 4.6 | 3.09 | 0.28 |
| Example 8 | 114 | 5439 | 91 | 1912 | 8.03 | 4.2 | 3.38 | 0.28 |
| Example 9 | 114 | 5439 | 91 | 1912 | 9.64 | 3.9 | 3.03 | 0.28 |
| Example 10 | 181 | 5062 | 53 | 1531 | 7.49 | 4.9 | 4.93 | 0.09 |
| Example 11 | 204 | 5207 | 53 | 1531 | 7.49 | 4.9 | 5.56 | 0.08 |
| Example 12 | 117 | 5704 | 154 | 2127 | 7.49 | 4.9 | 3.19 | 0.49 |
| Example 13 | 126 | 5968 | 158 | 1917 | 7.49 | 4.9 | 3.43 | 0.40 |
| Comparative Example 1 | 247 | 5855 | 91 | 1912 | 7.49 | 4.9 | 6.73 | 0.12 |
| Comparative Example 2 | 114 | 5439 | 91 | 1912 | 11.6 | 3.5 | 2.81 | 0.28 |
| Comparative Example 3 | 114 | 5439 | 91 | 1912 | 11.9 | 3.3 | 2.90 | 0.28 |
| Comparative Example 4 | 101 | 5007 | 169 | 2199 | 7.49 | 4.9 | 2.75 | 0.73 |

Test methods:

(1) Viscosity test

Using an Anton Paar MCR92 rheometer, a viscosity curve was obtained at various shear rates by shearing at a shear rate from 0.1 to 300 s$^{-1}$ at 25°C. The viscosity at a shear rate of $50\pm3$ s$^{-1}$ was read as the viscosity of the electrolyte solution.

(2) High-temperature cycle test

The prepared lithium ion battery was constant-current charged to 4.45 V at a high temperature ($45\pm3$°C) at a rate of 1C, then constant-voltage charged to 0.05C at 4.45 V, allowed to stand for 5 min, then constant-current discharged to 3.0 V at a rate of 1C, and allowed to stand for 5 min. This was one cycle. The capacity retention rate and thickness expansion rate (1000th full-charge thickness/first full-charge thickness) after 1000 high-temperature cycles were recorded. NEWARE test cabinet (model CTE-4080D-5V30A) was used for the cycle test. To keep the battery temperature constant during the cycle test, the battery was placed in a high- and low-temperature test chamber (model CH1000T), and the battery thickness was tested by a PPG tester (model ATMPPGSH200).

(3) Test after 20 cycles at 0°C

The prepared lithium ion battery was allowed to stand for 2 h at 0°C, constant-current charged to 4.45V at a rate of 0.5C, then constant-voltage charged to 0.05C at 4.45 V, allowed to stand for 5min, then constant-current discharged to 3.0 V at a rate of 0.5C, and allowed to stand for 5 min. This was one cycle. After 20 cycles, the battery was fully charged according to the above conditions, and then disassembled in a glove box under an inert atmosphere. The lithium plating on the surface of the negative electrode sheet was recorded. If there is obvious silvery white metallic product deposited on the surface of the negative electrode sheet, the tab or the crease, lithium plating is considered to occur. In the case of serious lithium plating, the lithium metal will have a side reaction with the electrolyte solution, causing the lithium metal to gradually change from silvery white to yellowish brown, and eventually black.

(4) Discharge test at -20°C

The prepared lithium ion battery was constant-current charged to 4.45 V at normal temperature ($25\pm3$°C) at a rate of 0.2C, then constant-voltage charged to 0.05C at 4.45 V, allowed to stand for 5min, and then constant-current discharged to 3.0 V at a rate of 0.2C, and allowed to stand for 5 min. The discharge capacity at 0.2C and normal temperature was recorded as the initial capacity of the battery. Then the lithium ion battery was constant-current charged to 4.45V at a rate of 0.2C, then constant-voltage charged to 0.05C at 4.45 V, and allowed to stand for 5 min. Then the lithium ion battery was allowed to stand at -20 °C for 2 h, and then constant-current discharged to 3.0V at a rate of 0.2C. The discharge capacity at -20 °C and 0.2C was recorded. (Discharge capacity retention rate at -20 °C = discharge capacity at -20 °C and 0.2C/initial capacity of the battery * 100%)

(5) Ionic conductivity test

The ionic conductivity was tested by a conductivity tester (model: S230) in a constant-temperature water bath (model: CBC5CS025). Before each test, calibration was carried out with a standard solution having an ionic conductivity of 12.88 mS/cm. The electrode rod was washed after calibration. Then the electrode rod was directly inserted into the electrolyte solution to be tested. The results were directly read from the conductivity tester and recorded. The constant-temperature water bath was used to control the temperature of the electrolyte solution. Generally, the test was conducted at room temperature (25°C).

(6) Vertical resistivity test

The vertical resistivity was tested by an electrode sheet resistance meter (model: IEST BSR2500). An electrode sheet sample to be tested of a certain size was placed on a sample cutting table and then in a test cavity of the resistance meter. The resistance reading in the instrument software was read. Accord to the probe diameter of the resistance meter, the thickness of the electrode sheet, and the resistivity calculation formula ($\rho$=R*S/L, R is in $\Omega$, S is in cm$^2$, and L is in cm), the vertical resistivity of the electrode sheet was measured.

Table 2. Results of cycle test and lithium plating test

| Example | High-temperature cycle | | Lithium plating on dissembled negative electrode sheet after 20 cycles at 0°C | Discharge capacity retention rate at -20°C |
|---|---|---|---|---|
| | Capacity retention rate | Thickness expansion rate | | |
| Example 1 | 88.90% | 3.90% | No lithium plating | 71.50% |
| Example 2 | 88.60% | 4.10% | No lithium plating | 73.10% |
| Example 3 | 87.80% | 4.40% | No lithium plating | 71.90% |
| Example 4 | 86.40% | 5.10% | No lithium plating | 68.80% |
| Example 5 | 84.80% | 10.20% | No lithium plating | 66.70% |
| Example 6 | 82.10% | 13.90% | No lithium plating | 64.60% |
| Example 7 | 89.30% | 5.80% | No lithium plating | 71.60% |
| Example 8 | 90.10% | 9.70% | No lithium plating | 72.10% |
| Example 9 | 89.90% | 12.50% | No lithium plating | 72.90% |
| Example 10 | 73.90% | 13.60% | Marginal lithium plating | 69.80% |
| Example 11 | 74.60% | 14.10% | Marginal lithium plating | 69.70% |
| Example 12 | 76.50% | 7.40% | No lithium plating | 67.30% |
| Example 13 | 75.90% | 7.30% | No lithium plating | 68.20% |
| Comparative Example 1 | 78.90% | 16.10% | Serious lithium plating | 59.30% |
| Comparative Example 2 | 65.90% | 18.40% | No lithium plating | 73.60% |
| Comparative Example 3 | 59.70% | 31.90% | No lithium plating | 76.40% |
| Comparative Example 4 | 68.30% | 20.90% | No lithium plating | 66.40% |

From the results in Table 1 and Table 2, it can be known through the comparison of Examples 1-13 and Comparative Examples 1-4 that when the value of $d/(C*\delta)$ is greater than 6, obvious lithium plating occurs to the lithium ion battery after low-temperature cycles, and the low-temperature discharge capacity retention rate is low. This is because the negative electrode active material layer is thick, the electrolyte solution cannot completely infiltrate the negative electrode sheet, and the impedance of the battery becomes larger, causing lithium plating on the negative electrode. When the value of $d/(C*\delta)$ is less than 3, the electrolyte solution contains a high proportion of a low-viscosity solvent in the electrolyte solution. Therefore, the low-temperature discharge and low-temperature cycle performances are improved. However, since the low-viscosity solvent usually has a low boiling point and a poor stability against oxidation, the electrolyte solution will be oxidized during the high-temperature cycle process, causing the gas generation inside the battery core, increase in the thickness expansion rate, and decrease in the capacity retention rate. When $0.1 \leq d'*R2/(d*R1) \leq 0.3$, the lithium intercalation kinetics of the negative electrode and the lithium deintercalation kinetics of the positive electrode remain relatively balanced during charging, the lithium plating on the negative electrode is alleviated, and the low-temperature discharge rate at -20°C is improved.

Preferred embodiments of the present disclosure are described above, but which cannot be understood as a limitation on the scope of the present disclosure. It should be noted that several improvements and modifications can be made by those of ordinary skill in the art without departing from the principle of the present disclosure, which shall fall within the protection scope of the present disclosure.

**Claims**

1.  A lithium ion battery, comprising:

      a positive electrode, the positive electrode comprising a positive electrode current collector and at least a positive electrode active material layer, and the positive electrode active material layer being coated on one or two sides of the positive electrode current collector;
      a negative electrode, the negative electrode comprising a negative electrode current collector and at least a negative electrode active material layer, the negative electrode active material layer being coated on one or two sides of the negative electrode current collector, and the total thickness of the negative electrode active material layer on a single side of the negative electrode current collector being d μm; and

an electrolyte solution, the electrolyte solution having an ionic conductivity of C mS/cm, the electrolyte solution having a viscosity of δ mPa·s, and

the lithium ion battery meeting a relation formula: $3 \le d/(C^*\delta) \le 6$, wherein the ionic conductivity C refers to an ionic conductivity at 25°C, and the viscosity δ refers to a corresponding viscosity at 25°C and at a shear rate of 50 s$^{-1}$.

2. The lithium ion battery according to claim 1, wherein $6 \le C \le 12$.

3. The lithium ion battery according to claim 1 or 2, wherein $3 \le \delta \le 5$.

4. The lithium ion battery according to any one of claims 1 to 3, wherein $100 \le d \le 250$.

5. The lithium ion battery according to any one of claims 1 to 4, wherein the total thickness of the positive electrode active material layer on a single side of the positive electrode current collector is d' μm, and d' meets the following relation formula: $70 \le d' \le 170$.

6. The lithium ion battery according to any one of claims 1 to 5, wherein the negative electrode has a vertical resistivity of R1 Ω·cm, the positive electrode has a vertical resistivity of R2 Ω·cm, and R1 and R2 meet the following relation formulas: $0.1 \le R2/R1 \le 0.5$, and $0.1 \le d'^*R2/(d^*R1) \le 0.3$.

7. The lithium ion battery according to claim 6, wherein $5000 \le R1 \le 6000$; and/or wherein $1500 \le R2 \le 2500$.

8. The lithium ion battery according to any one of claims 1 to 7, wherein the electrolyte solution comprises a solvent, and the solvent comprises one or more of a cyclic carbonate, a linear carbonate, and a carboxylate compound;

the carboxylate compound comprises at least one of ethyl formate, methyl acetate, ethyl acetate, propyl acetate, ethyl propionate, propyl propionate, butyl propionate, pentyl propionate, halogenated ethyl acetate, halogenated ethyl propionate, halogenated propyl propionate, halogenated butyl propionate, or halogenated pentyl propionate;

the linear carbonate comprises at least one of dimethyl carbonate, ethyl methyl carbonate, diethyl carbonate, halogenated dimethyl carbonate, halogenated ethyl methyl carbonate, and halogenated diethyl carbonate; and

the cyclic carbonate comprises at least one of cyclic ethylene carbonate, cyclic propylene carbonate, halogenated cyclic ethylene carbonate, and halogenated cyclic propylene carbonate.

9. The lithium ion battery according to claim 8, wherein the electrolyte solution further comprises a lithium salt, and the lithium salt comprises one or more of lithium hexafluorophosphate, lithium tetrafluoroborate, lithium bis(fluorosulfonyl)imide, lithium trifluoromethylsulfonate, lithium perchlorate, lithium difluoro(oxalato)borate, and lithium bis(oxalato)borate.

10. The lithium ion battery according to claim 9, wherein the lithium salt concentration is W% based on the total weight of the electrolyte solution, and W meets the following relation formula:

$$10 \le W \le 16.$$

11. The lithium ion battery according to any one of claims 8 to 10, wherein the electrolyte solution further comprises an additive, and the additive comprises one or more of fluoroethylene carbonate, vinylene carbonate, 1,3-propanesultone, 1,3,6-hexane trinitrile, glyceryl trinitrate, 1,2-bis(cyanoethoxy)ethane, 1,4-dicyano-2-butene, fumaronitrile, succinonitrile, and adiponitrile.

12. The lithium ion battery according to any one of claims 1 to 11, wherein the negative electrode active material layer comprises a negative electrode active material, and the negative electrode active material comprises at least one of soft carbon, hard carbon, carbon fibers, and graphitized carbon microspheres, artificial graphite, natural graphite, silicon, silicon carbide, and silicon-carbon composite materials.

13. The lithium ion battery according to any one of claims 1 to 12, wherein the positive electrode active material layer comprises a positive electrode active material, and the positive electrode active material comprises at least one of a lithium cobalt oxide, a lithium nickel oxide, a lithium manganese oxide, a lithium nickel manganese oxide, a lithium nickel cobalt manganese oxide, and a lithium nickel cobalt aluminum oxide.

14. The lithium ion battery according to any one of claims 1 to 13, further comprising a separator, the separator being arranged between the positive electrode and the negative electrode, and the separator being impregnated by the electrolyte solution.

15. An electric device, comprising a lithium ion battery according to any one of claims 1 to 14.

Europäisches
Patentamt

European
Patent Office

Office européen
des brevets

# EUROPEAN SEARCH REPORT

**Application Number**

EP 25 16 0089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 275 103 A (BYD CO LTD) 1 November 2022 (2022-11-01) * the whole document * & US 2025/246609 A1 (ZHANG WEI [CN] ET AL) 31 July 2025 (2025-07-31) ----- | 1-9, 11-15 | INV. H01M10/0525 H01M10/0567 H01M10/0568 H01M10/0569 H01M4/131 H01M4/133 H01M4/587 H01M4/02 |
| X | US 2024/079652 A1 (QIAN YUNXIAN [CN] ET AL) 7 March 2024 (2024-03-07) * paragraph [0011] - paragraph [0025] * * paragraph [0031] - paragraph [0036] * * paragraph [0048] - paragraph [0049] * * paragraph [0060] - paragraph [0066] * * paragraph [0076] - paragraph [0078] * * claims 1-13 * ----- | 1-15 | |

**TECHNICAL FIELDS
SEARCHED      (IPC)**

H01M

The present search report has been drawn up for all claims

| Place of search | Date of completion of the search | Examiner |
|---|---|---|
| Munich | 4 August 2025 | Tylus, Urszula |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                             

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 0089

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | Publication date | Patent family member(s) | Publication date |
|---|---|---|---|
| CN 115275103 A | 01-11-2022 | CN 115275103 A | 01-11-2022 |
| | | EP 4593106 A1 | 30-07-2025 |
| | | KR 20250044928 A | 01-04-2025 |
| | | US 2025246688 A1 | 31-07-2025 |
| | | WO 2024067290 A1 | 04-04-2024 |
| US 2024079652 A1 | 07-03-2024 | CN 114695943 A | 01-07-2022 |
| | | EP 4273990 A1 | 08-11-2023 |
| | | US 2024079652 A1 | 07-03-2024 |
| | | WO 2022143189 A1 | 07-07-2022 |

EPO FORM P0459

For more details about this annex : see Official Journal of the European Patent Office, No. 12/82